# EUROPEAN PATENT APPLICATION

(11) **EP 1 132 137 A1**
(43) Date of publication of application: **12.09.2001**
(21) Application number: 00104949.3
(22) Date of filing: 08.03.2000
(51) Int. Cl.: B02C 13/14, F16D 69/02, B29B 17/00

(54) **Process for recycling material containing high-tenacity fibers impregnated with a resin matrix**

(71) Applicant: Twaron Products GmbH, 42103 Wuppertal (DE)
(72) Inventor: Korte, Hans, 23966 Wismar (DE)
(74) Representative: Fett, Günter

(57) **Abstract**

The invention pertains to a process for recycling a material containing high-tenacity fibers impregnated with a resin matrix, characterized in that the process comprises the steps of:
- introducing the material containing the fibers and the resin matrix into a hammer mill which comprises a shaft mounted with at least three series or stages of hammers and a substantially cylindrical sieve disposed substantially concentrically around the shaft,
- milling the material for a time sufficient to grind at least 50%, and preferably at least 80%, of the resin into small particles,
- separating the small resin particles from the fibers by means of the sieve.

This process allows a very high degree of separation and does not require additional process steps like cryogenical chilling.

## Description

The invention pertains to a process for recycling material, e.g., helmets and other anti-ballistic objects, containing high-tenacity fibers impregnated with a resin matrix.

Such a process is known from, e.g., EP 324 910 A2, which describes how pieces of aramid cloth impregnated with a blend of phenolic and polyvinyl butyral resins are cryogenically chilled to a point of embrittlement in a liquid nitrogen bath and then fed to a rotary impact mill (which is chilled by cold gaseous nitrogen from the nitrogen bath) to comminute the pieces into a composite material suitable for use in brake linings and the like. The use of liquid nitrogen renders the process expensive, complicated, and hazardous.

Moreover, it is preferred not to grind the composite material into smaller pieces of composite material, but, instead, to actually separate the high tenacity aramid fibers from the resin matrix. For, the resin residues still present in the fibrous material renders the fibers unsuitable for use in applications such as gaskets, paper, or stretch broken yarn and may react when used in a friction composite.

It is the object of the present invention to provide a process for recycling anti-ballistic helmets and other products comprising high-tenacity fibers embedded in a resin matrix which is inexpensive and allows a high degree of separation.

This object is achieved by a process comprising the steps of:
- introducing the material containing the fibers and the resin matrix into a hammer mill which comprises a shaft mounted with at least three series or stages of hammers and a substantially cylindrical sieve disposed substantially concentrically around the shaft,
- milling the material for a time sufficient to grind at least 50%, and preferably at least 80%, of the resin into small particles (without substantially grinding the high-tenacity fibers and/or the fabric into small particles),
- separating the small resin particles from the fibers by means of the sieve.

Hammer mills, such as the Markseparator Centurion ex Pallmann, are known for processing vegetable materials like sugar-cane, which consists of a soft marrow or medulla surrounded by a tough wall of cellulose fibers. Surprisingly, it was found that the hammer mill, which is designed to separate a soft substance (i.e., the medulla) from a shell of natural fibers, is eminently suitable for separating high-tenacity synthetic fibers, for instance aramid fibers, from the brittle or friable resin matrix with which they are impregnated. As will be demonstrated below, the process according to the invention allows a very high degree of separation. Further, there is no need for expensive and hazardous process steps like cryogenical chilling.

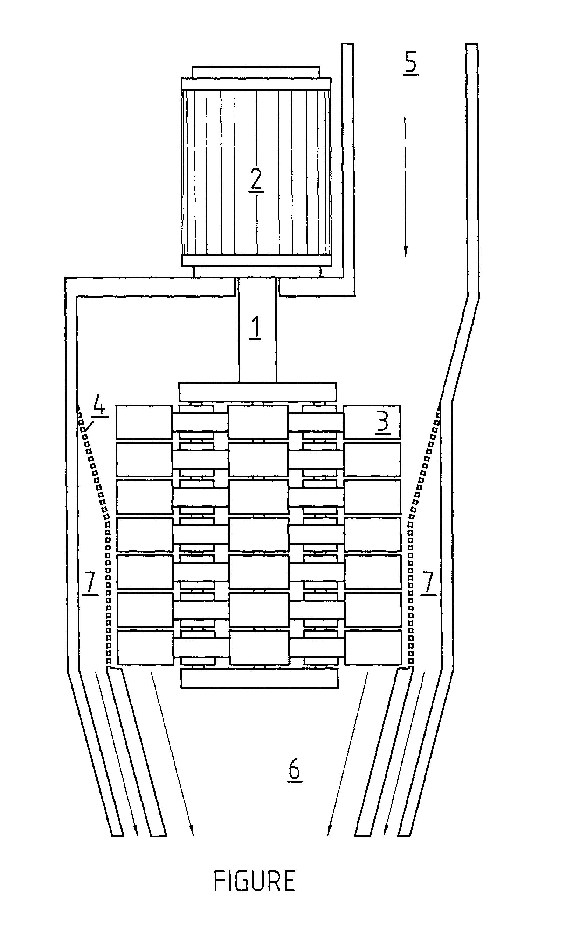

A hammer mill especially suitable for use in the process according to the present invention in depicted in the Figure. Said mill comprises a shaft (numeral 1) driven by an electric motor (2) and mounted with seven series or stages of four hammers (3) each and a cylindrical sieve (4) disposed concentrically around the shaft (1). The top part of the sieve (4) is upwardly divergent (as the frustum of a cone) so as to locally increase the distance between the hammers (3) nearest the inlet (5) and the sieve (4).

Thus, larger pieces introduced into the mill are effectively reduced in size before reaching the lower hammers, and the risk of jamming is minimized.

A suitable alternative to the diverging sieve (4) resides in the use of shorter helves to mount the hammers in the upper stages on the main shaft (1).

It is preferred that the shaft and the sieve are disposed substantially vertically because this allows for continuous feeding of the material which is to be recycled to the inlet (5) and, of course, also for continuous removal of the fibrous particles from a first outlet (6) and of the resin particles from a second (annular) outlet (7).

Alternatively, the hammers may have a propeller-like shape which causes an airflow forcing the materials through the device. This technique may, of course, also be of use in combination with a vertical shaft and sieve, in which case it serves to increase the flow rate of the materials.

To further reduce the risk of jamming at least the hammers nearest the inlet of the hammer mill are pivotably and resiliently mounted on the shaft, thus enabling said hammer to let larger chunks pass. However, it is preferred that all the hammers of the hammer mill are pivotably and resiliently mounted on the shaft.

It was found that the degree of separation and the particle size and particle size distribution can be improved by increasing the number of series or stages of hammers.
It is preferred that the main shaft is provided with at least five series or stages of hammers. For reasons of economy and practicality, this number preferably does not exceed twelve.

The number of hammers in each series or stage is at least two, preferably at least three. In practice, not more than six hammers will be used in each stage.

The pieces of fiber impregnated with a resin matrix, which are also known as "prepregs," are preferably smaller than 20 x 20 cm (and, more preferably, smaller than 10 x 10 cm) when they are introduced into the mill, because larger pieces may damage the internals of the mill. Cutting is, of course, one way of reducing the size of large pieces, but crushing is preferred since it will cause a certain degree of delamination of the fibers and the matrix.

At least in the series or stages farthest from the inlet of the hammer mill, the distance between the hammers and the sieve is preferably between 2 and 30 mm, and more preferably between 4 and 10 mm.

The mesh size of the sieve, which plays an important part in the degree of separation and the size of the resin particles, is preferably between 3 and 20 mm, more preferably between 5 and 10 mm.

If the total area of the holes in the sieve is large, the production capacity of the mill will be high. It is preferred that the ratio of the total area of the holes in the sieve to the total area of the sieve is in the range from 30 to 60%, and preferably in the range from 40 to 50%. Within this range a high capacity is combined with sufficient mechanical strength of said sieve.

Other parameters which play a significant role in the production capacity and the degree of separation are the number of revolutions per minute of the shaft (preferably in excess of 700 RPM) and the shape of the hammer.

With the process according to the present invention it is possible to obtain fibrous material in which the content of resin in the resulting fiber fraction is lower than 3%.

The invention further pertains to a composite material comprising high-tenacity fibers obtained with the separation process described above, which materials are inexpensive and contribute substantially to a reduction of pollution. Examples of such materials are friction papers in clutches, clutch faces, gaskets, and brake shoes, pads, and linings.

The resin should be brittle or friable to a certain extent. Examples of suitable and common resins are epoxy resin, phenolic resins, and cross-linked polyesters. In most ballistic articles such as helmets, the resin will normally be present in an amount below 25 wt%, for example 12-13 wt%. The recovered resin also can be re-used, e.g., in brake linings.

The fibers can be in the form of staple fibers, (unidirectional) filaments, a non-woven or, preferably, a fabric. Examples of high-tenacity fibers which can be regained with the process according to the invention are aramid fibers, especially PPDT fibers and extended chain polyethylene fibers. In general, fibers which are not pulverized by the action of the hammer mill can be regained by the process according to the present invention.

## Claims

1. A process for recycling a material containing high-tenacity fibers impregnated with a resin matrix, **characterized in that** the process comprises the steps of:
- introducing the material containing the fibers and the resin matrix into a hammer mill which comprises a shaft (1) mounted with at least three series or stages of hammers (3) and a substantially cylindrical sieve (4) disposed substantially concentrically around the shaft (1),
- milling the material for a time sufficient to grind at least 50%, and preferably at least 80%, of the resin into small particles,
- separating the small resin particles from the fibers by means of the sieve (4).

2. The process according to claim 1 wherein the shaft (1) and the sieve (4) are disposed substantially vertically.

3. The process according to claim 1 or 2 wherein at least the hammers (3) nearest the inlet (5) of the hammer mill are pivotably and resiliently mounted on the shaft (1).

4. The process according to any one of the preceding claims wherein the shaft (1) is provided with at least five series or stages of hammers (3).

5. The process according to any one of the preceding claims wherein the number of hammers (3) in each series or stage is at least three.

6. The process according to any one of the preceding claims wherein, at least in the series or stages farthest from the inlet (5) of the hammer mill, the distance between the hammers (3) and the sieve (4) is between 3 and 30 mm, preferably between 5 and 10 mm.

7. The process according to any one of the preceding claims wherein the mesh size of the sieve (4) is between 3 and 20 mm, preferably between 5 and 10 mm.

8. The process according to any one of the preceding claims wherein the content of resin in the resulting fiber fraction is lower than 3%.

9. A composite material comprising high-tenacity fibers obtained with the separation process according to any one of the preceding claims.

10. The composite material according to claim 9 wherein the fibers consist substantially of aramid.
